# EUROPEAN PATENT APPLICATION

(11) **EP 2 719 432 A1**
(43) Date of publication of application: **16.04.2014**
(21) Application number: 13188319.1
(22) Date of filing: 11.10.2013
(51) Int. Cl.: A63J 5/02, F41H 9/08, G08B 15/02, H01M 2/10

(54) **Fog-generating device and removable housing therefore**

(30) Priority: 11.10.2012 NL 1039846; 31.12.2012 NL 1039983
(71) Applicant: Bandit NV, 3660 Opglabbeek (BE)
(72) Inventor: Vandoninck, Alfons, 3660 Opglabbeek (BE)
(74) Representative: Laenen, Bart Roger Albert

(57) **Abstract**

The present invention relates to a removable housing for removably connecting to a fog-generating device that comprises a heat exchanger, said removable housing comprising a power source and a reservoir containing fog-generating liquid. In particular, the power source is of chemical nature, such as a battery or a pyrotechnic device. The invention also relates to fog-generating devices comprising such a removable housing and the use of such housings and devices to generate fog.

## Description

### FIELD OF THE INVENTION

The present invention relates to a removable housing for removably connecting to a fog-generating device that comprises a heat exchanger, said removable housing comprising a power source and a reservoir containing fog-generating liquid. In particular, the power source is of chemical nature, such as a battery or a pyrotechnic device. The invention also relates to fog-generating devices comprising such a removable housing and the use of such housings and devices to generate fog.

### BACKGROUND TO THE INVENTION

Fog-generating devices are used in several applications. They are used in entertainment for creating a specific mood or enhancing visual lighting effects. During the training of emergency and military personnel, they are used to simulate fire. In addition, they are used in security systems to disorient intruders and to hide valuables from them. Typically, a fog-generating device creates fog by driving a fog-generating substance through a heat exchanger; upon which the fog-generating substance is converted into the vapour phase that is ejected at the exit [end] of the heat exchanger. Dependent upon the atmosphere in which said vapour is being ejected; the vapour may condense upon expansion into tiny liquid droplets suspended in the air as an aerosol, with the formation of a fog.

Thus as used herein "expelling fog" by a fog-generating device, generally refers to the process wherein a fog-generating substance (hereinafter also referred to as a fog-generating fluid or material) is driven through a heat-exchanger, with the conversion of said fog-generating substance into the vapour phase that is ejected at the exit [end] of said heat exchanger.

Power for the general functioning of the fog-generating device and for heating the heat exchanger is provided through the mains (for stationary devices) and/or through a battery (e.g. for portable devices, such as described in GB2324636). In the case of fog-generating devices for security applications, an emergency battery can power the fog-generating device in the event of an unintentional or intentional power break. In general, the emergency battery is a lead-acid battery, most often of 12V DC.

In addition to the above, the inventors have identified that a pyrotechnic device can act as a power source to drive fog-generating liquid to the heat exchanger. For example, the pyrotechnic device can comprise ignition means and a reagent. Upon ignition of the reagent, gas is generated which drives the fog-generating liquid to the heat exchanger. It has been found that a pyrotechnic device as described herein allows for a much faster generation of fog compared to prior art devices. This is especially important for fog-generating devices used in security.

A professional fog-generating device for security purposes will often comprise a removable housing that comprises a reservoir that stores the fog-generating liquid. This prevents that, after each fog generation, the fog-generating liquid needs to be refilled in situ. By using a removable housing, a user can simply replace an emptied housing with a new one and send the empty housing to the supplier for a refill. In practice, the removable housing for the fog-generating liquid needs to replaced every three years even if it has not been used for the generation of fog.

One of the main drawbacks of the current fog-generating devices relates to the emergency battery. Normally, this battery will be present in the housing of the fog-generating device. The temperature in the housing is easily 10 °C higher than the ambient temperature and the device is frequently mount to the ceiling, where the ambient temperature in itself is often above 30°C. As a consequence, the emergency battery is often exposed at temperatures of over 40 °C. At this temperature, the corrosive effects of the acid on the battery plates will drastically reduce the battery's lifetime. Depending on the circumstances, a yearly replacement of the battery is often needed to guarantee that the emergency battery will be able to power the fog-generating device in the event of a power break of the main power circuit.

Further to the aforementioned problems associated with the battery, also the other power sources that can be used to drive fog-generating liquid to the heat exchanger, in particular pyrotechnic devices, will in general be single-use, one-shot power sources. After discharge, the fog-generating fluid has been expelled from the reservoir to the heat exchanger and substantially all the power from the power source has been used.

Besides the costs associated with the replacement of the power source(s) by a skilled technician, either yearly or each time after the device has generated fog, these replacements are subject to several other complications. For example, the technician may improperly connect the power source, e.g. connect the battery using the wrong polarity, or forget to connect one of the poles of the power source, which may lead to failure of the device. Other frequently encountered problems include that the technician may arrive at the scene without a new or fitting power source. Further complications are inherent to manipulations of security devices, such as notifying the emergency services, bridging the sabotage detection system, etcetera.

It has been found that the fog-generating device and the removable housing of the present invention provide a solution to the above-mentioned problems. In particular, the removable housing allows easy maintenance of the device, since both the power source(s) and the fog-generating liquid can be exchanged at the same time in a fool-proof manner.

### SUMMARY OF THE INVENTION

The present invention relates to a removable housing for removably connecting to a fog-generating device that comprises a heat exchanger, said removable housing comprising a power source and a reservoir containing fog-generating liquid.

In a particular embodiment, the present invention is directed to a fog-generating device comprising a power circuit, a heat exchanger, means to drive a fog-generating liquid to said heat exchanger, and a removable housing; **characterised in that** said removable housing comprises a battery and fog-generating liquid. Furthermore, the present invention provides a removable housing for use in a fog-generating device, **characterised in that** it comprises a battery and a fog-generating liquid.

In another embodiment, a removable housing according to the invention is provided, wherein said power source is a pyrotechnic device, particularly for driving the fog-generating fluid from the reservoir to the heat exchanger.

In an even further embodiment, a removable housing according to the invention is provided, wherein said removable housing comprises a power source for general functioning of the fog-generating device, a power source to drive fog-generating liquid to the heat exchanger, and a reservoir containing fog-generating liquid. Within this embodiment the power source for general functioning, typically consists of a battery; and the power source to drive fog-generating liquid, typically consists of a pyrotechnic device. Thus in a further embodiment, the removable housing comprises a battery, a pyrotechnic device and a reservoir containing fog-generating liquid.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.
**Fig. 1****:** Schematic drawing of a fog-generating device according to the present invention.
**Fig. 2****:** Cross sectional view of a removable housing according to the present invention, comprising a pyrotechnic device as a power source.
**Fig. 3****:** Cross sectional view of a removable housing according to the present invention, comprising a pyrotechnic device as a power source.
**Fig. 4****:** Cross sectional view of a removable housing according to the present invention, comprising a pyrotechnic device as a power source.
**Fig. 5****:** Cross sectional view of a removable housing according to the present invention, comprising a pyrotechnic device as a power source.
**Fig. 6****:** Cross sectional view of a removable housing according to the present invention, comprising a pyrotechnic device as a power source.
**Fig. 7****:** Cross sectional view of a removable housing according to the present invention, comprising a pyrotechnic device as a power source.

### DETAILED DESCRIPTION OF THE INVENTION

It has been found that the problems associated with the fog-generating devices of the prior art can be solved by the generation of a fog-generating device that comprises a removable housing that in itself comprises a power source and fog-generating liquid. Thus, as already described herein before, the present invention relates to a removable housing for removably connecting to a fog-generating device that comprises a heat exchanger, said removable housing comprising a power source and a reservoir containing fog-generating liquid. In particular, said power source can provide energy for driving said fog-generating liquid from said reservoir to the heat exchanger of the fog-generating device and/or for at least powering one or more elements of the fog generating device, such as the general function, heating the heat exchanger or powering the means to drive said fog-generating fluid from the reservoir to the heat exchanger (e.g. by a pump)

For example, said power source can be a battery that can be used for fully powering said device, i.e. for the general function of the device, for the heating of the heat exchanger, and for driving said fog-generating fluid from the reservoir to the heat exchanger (e.g. by a pump). As another example, said power source can be a battery that can heat the heat exchanger and provide power for the general functioning, while a separate power source, which is preferably included in the removable housing, can be used to drive the fog-generating liquid to the heat exchanger (e.g. a pyrotechnic device). As a further non-limiting example, the removable housing may contain a power source that only delivers power for driving the fog-generating liquid from the reservoir to the heat exchanger. In this example, the power necessary for the further elements of the fog generating device, such as the general function, and the heating of the heat exchanger, may be provided by the mains, or by a battery not present in the removable housing. Therefore, in a particular embodiment, said power source is a battery and/or a pyrotechnic device. In a further embodiment, said power source is a battery. In another embodiment, said power source is a pyrotechnic device. In an even further embodiment, said power source is a battery and a pyrotechnic device.

As described herein before, the present invention also provides a removable housing for removably connecting to a fog-generating device comprising a power circuit, a heat exchanger, means to drive a fog-generating liquid to said heat exchanger, and a removable housing; **characterised in that** said removable housing comprises a battery and fog-generating liquid. In particular a removable housing for removably connecting to a fog-generating device wherein said battery can at least partially power said device. More in particular, wherein said battery can heat said heat exchanger and/or can provide power for the general functioning of said device. Preferably, said batter can power said device.

In another particular embodiment, the power source present in the removable housing is connected to the power circuit of the fog-generating device. To that extend, the removable housing may further comprise power connection means. In a particular embodiment, said power connection means are battery connection means to connect the battery to the power circuit of the fog-generating device. In another particular embodiment, said power connection means are ignition connection means to connect the ignition of the pyrotechnic device to the power circuit of the fog-generating device. In another particular embodiment, said power connection means are battery as well as ignition connection means, connecting both a battery and a pyrotechnic device to the power circuit of the fog-generating device.

In a particular embodiment, the power connection means are constructed in such a way that the power source is always connected to the power circuit in the right polarity. In another particular embodiment, the removable housing is constructed in such a way that its insertion into the fog-generating device precludes that the battery is connected in the wrong polarity. Connection with the right polarity is especially important if the power source in the removable housing is a rechargeable battery. For example, the removable housing and the receptacle of the fog-generating device wherein the removable housing needs to be inserted may be asymmetric. It is also an object of the present invention to provide a fog-generating device as described herein before, further comprising fixation means to removably connect the removable housing with said fog-generating device. These fixation means allow that the removable housing is securely fitted within the fog-generating device after installation. Any known fixation means can be used, including one or more screws, straps, trapping doors. Trapping doors may for example be hinged and/or secured themselves with on or more screws.

In another particular embodiment, the removable housing of the present invention comprises liquid connection means to allow a liquid connection between the reservoir in the removable housing containing fog-generating liquid to the heat exchanger. The liquid connecting means may take a variety of forms, to suit the present applications. For example, it may comprise a conduit in the form of a tube or a hollow needle, an aperture, or a slit in a membrane. The conduit may be arranged such that no appreciable flow can occur under gravity alone. In this way, controlled delivery of the fog-generating liquid can be achieved. The conduit may, for example, comprise a small aperture, or a tubular portion with a small bore, such that surface tension of the liquid inhibits flow. Alternatively, or additionally, the conduit may comprise two-way valve means, arranged to prevent fluid flow unless the pressure difference across it exceeds a certain value. In particular, the liquid connection means ensure a liquid-tight connection through which the fog generating liquid can run, from the removable housing to the heat exchanger.

In addition to the power source in the removable housing which may at least partially power the device and/or provide energy required for driving the fog-generating liquid to the heat exchanger, the fog-generating device of the present invention may comprise (additional) means to drive a fog-generating liquid to the heat exchanger. Non-limiting examples of means to drive a fog-generating liquid to the heat exchanger include a pump or a propellant gas. In a particular embodiment, the removable housing of the present invention comprises the means to drive a fog-generating liquid to the heat exchanger. More in particular, the present invention provides a fog-generating device as described herein before, comprising a power circuit, a heat exchanger, and a removable housing; wherein said removable housing comprises a battery, a fog-generating liquid, and means to drive said fog-generating liquid to said heat exchanger. In particular, wherein said removable housing comprises a battery, a fog-generating liquid and a propellant gas. One or more valves may be present in the removable housing to prevent ejection of the fog-generating liquid. In a particular embodiment, the fog-generating device of the present invention comprises a valve that is adapted to control the fog-generating fluid flow rate, such as for example described in EP1985963 A1. In another particular embodiment, means to drive a fog-generating liquid to the heat exchanger are comprised in the fog-generating device but not comprised in the removable housing. For example, the fog-generating device of the present invention may comprise a pump that is not located in the removable housing. In this embodiment, the fog-generating device of the invention comprises hydraulic connection means to transfer the energy from the pump to the fog-generating liquid. Thereby, the fog-generating liquid is transported from the removable housing to the heat exchanger. In another example, the power source in the removable housing is a pyrotechnic device that provides the energy to drive the fog-generating liquid to the heat exchanger. Evidently, in this example no additional means (such as a pump or a pressurized vessel) are required to drive the liquid to the heat exchanger. Therefore, in a particular embodiment, said removable housing comprises a battery and a reservoir containing fog-generating liquid, wherein said reservoir further contains propellant gas in an amount sufficient to expel the fluid from the reservoir. In another particular embodiment, said removable housing comprises a pyrotechnic device and a reservoir containing fog-generating liquid, wherein the reservoir does not contain propellant gas.

In a particular embodiment, the power source in the removable housing consists of or comprises a separate container. Said container may be located within or outside of the reservoir containing the fog-generating liquid. For example, the battery housing is a container and said battery can be located in the reservoir or outside of it. As another example, said power source is a pyrotechnic device, wherein the reagent is present in said container, hereinafter also referred to as the reagent-containing container. The reagent-containing container may be located in the reservoir, or outside of it. In a preferred embodiment, said container is in itself removable from the removable housing. This allows for the easy recycling of the removable housing. For example, during maintenance, the removable housing may be removed from the fog-generating device and replaced by a new one. The old removable housing is sent to the producer, who can remove and replace the power source container. The reservoir containing the fog-generating liquid can be refilled.

In particular, the present invention provides a removable housing comprising a chemical power source and a reservoir containing fog-generating liquid. Examples of a chemical power source include a battery, which provides energy due to (electro)chemical reactions, and a pyrotechnic device which provides energy due to combustion of a reagent.

In a particular embodiment, the fog-generating device of the invention comprises means to connect the power circuit of the fog-generating device to an external power supply. As an external power supply, any known power supply can be used, such as, but not limited to, a mains power system, an external battery, a solar power system, generators or alternators. In this instance, the external power system is used to power the fog-generating device under normal circumstances. As described herein above, to prevent interruption of the security system, a fog-generating device for security purposes should comprise an emergency power circuit. In a particular embodiment, a battery is present as a power source in the removable housing and is connected to such an emergency power circuit. In such event, said battery can power the fog-generating device in the event of a power break of the main power circuit. Consequently, it is also an object of the invention to provide a fog-generating device comprising a removable housing as described herein before, wherein a power circuit is present that comprises an emergency power circuit and wherein said power connection means connect said battery to said emergency power circuit.

In another particular embodiment, the battery of the removable housing of the invention is a rechargeable battery. Any rechargeable battery can be used, for example a lead-acid battery, a nickel cadmium battery (NiCd), a nickel metal hydride (NiMH) battery, a lithium ion (Li-ion) battery, or a lithium ion polymer (Li-ion polymer) battery. In a preferred embodiment, said rechargeable battery is selected from the group consisting of a nickel cadmium battery (NiCd), a nickel metal hydride (NiMH) battery, a lithium ion (Li-ion) battery, and a lithium ion polymer (Li-ion polymer) battery; more in particular a nickel metal hydride (NiMH) battery, a lithium ion (Li-ion) battery, and a lithium ion polymer (Li-ion polymer) battery.

Compared to the usually used lead-acid battery, rechargeable NiCd, NiMH, Li-ion and Li-ion polymer batteries are much more compact, and accordingly preferred within the context of the present invention. In addition, they are found to be better resistant to the high heat temperatures within the housing of a fog-generating device. High-quality batteries can easily resist temperatures up to 60 °C. It has been found by the inventors of the present application that by using such rechargeable batteries, a removable housing can be constructed for a fog-generating device, wherein said removable housing is compact and has a long battery life-time (on average 5 years or longer). This generates significant benefits. As described herein before, the fog-generating liquid needs to be replaced about every three years. In the fog-generating device of the present invention, this is easily done by replacing the removable housing with a new one. Besides replacing the fog-generating liquid, this also replaces the rechargeable battery. The removable housing can be sent to the supplier, who can refill or replace the fog-generating liquid in the removable housing and check if the battery in the removable housing is still in good condition or needs to be replaced. Thus, the removable housing allows a technician or user to replace an old removable housing comprising an old battery and old fog-generating liquid with a new housing comprising a new battery and fog-generating liquid at the same time.

In a preferred embodiment, the rechargeable battery is kept in a charged state by the external power supply. Therefore, the present invention also provides a fog-generating device as described herein before, further comprising:
- charging means that allow charging said rechargeable battery by said external power supply, and
- a controller that controls said charging means to ensure that said rechargeable battery is kept in a charged state.

The type of charging means used may be selected based on the type of rechargeable battery. As a non-limiting example, trickle charging may be used to constantly keep the rechargeable battery charged. In addition, a so-called "intelligent charger" may be used which detects if the battery is fully charged. In a particular embodiment, said controller comprises means to detect the charging state of the battery. In another particular embodiment, said controller ensures that said rechargeable battery is kept at a certain charged state, for example at a charged state in a range of 30 to 60%; in particular in a range of 40 to 50%. This allows for the prolongation of the battery life of for example Li-ion batteries.

Furthermore, the present invention provides a fog-generating device comprising a heat exchanger and a removable housing as described herein. In another particular embodiment, the invention provides a removable housing for use in a fog-generating device, **characterised in that** it comprises a battery and a fog-generating liquid. In another particular embodiment, said battery is a rechargeable battery as described hereinabove. In yet another particular embodiment, the removable housing of the invention further comprises battery connection means to connect said battery to the power circuit present within said fog-generating device. In a further particular embodiment, the present invention provides a removable housing as described herein before, further comprising liquid connection means to allow transfer of said fog-generating liquid to said fog-generating device. In a preferred embodiment, the fog-generating liquid as described herein before is a glycol-containing mixture. Evidently, the present invention also provides the use of a fog-generating device or a removable housing according to the invention for generating fog. In particular for generating fog to protect against intruders and/or physical threat by persons.

In the prior art, most often a pump is used to drive fog-generating liquid from a reservoir to a heat exchanger. However, in said case, the time needed to convert all the fog-generating liquid to fog is dependent on the capacity of the pump, i.e. its ability to deliver a given flow within a given time at given pressure. Fog-generating device are often powered by standard voltage batteries, further restricting the capacity of such pumps. In addition, high-capacity liquid pumps would lead to too high product prices. Therefore, utilization of pumps to drive fog-generating liquids from the reservoir to the heat-exchanger seriously restricts the fog output of those fog-generating devices. WO2008132113 addresses this problem by using a pressure [compressed] vessel as a fog-generating liquid reservoir. When fog needs to be generated a normally closed valve (switch) between the pressure vessel and the connected heat exchanger is opened and, the pressure inside the vessel drives the fog-generating liquid from said vessel to the heat exchanger, thereby improving the capacity at which fog can be expelled from the device.

The capacity at which fog can be generated is of crucial importance when the device is used as a security device. For example, in the case of a burglary, the fog-generating device should fill the room with fog within a few seconds. In such case, valuables are immediately obscured from the sight of the intruder, and he will quickly try to escape by leaving the room. When fog is generated too slowly, the thief may use the additional seconds to quickly grasp valuables before leaving. The speed at which fog is generated by the device of WO2008132113 is dependent on the pressure in the vessel that contains the fog-generating liquid. While the pressure (P) and volume (V) that can be contained in the vessel is unlimited in theory, the legal framework on devices containing pressurized vessels restricts it s capacity. Above certain pressure thresholds and P x V, the laws make it impractical to build, transport, install and use such devices. Thus, although WO2008132113 presented a major improvement for security fog-generating devices, there is still a need for devices for faster fog generation, e.g. to more quickly fill a room with fog or to fill larger rooms with fog in the same time-frame.

Prior art fog-generating devices for security purposes have another inherent risk. In contrast to fog-generating devices for entertainment, for military use and for training emergency personnel, fog-generating devices for security purposes need to be able to remain inactive for several years, without reducing their reliability. Indeed, it is very likely that a burglary/ violent threat will only happen (if ever) several years after instalment of the device. It has been found that prior art fog-generating devices comprising pumps become unreliable over time, apparently due to blockage, corrosion and/or chemical resistance problems or other failure of these pumps when they are not regularly used. Although the pump-less variant of WO2008132113 already presents an improvement in that regard, it is not possible to fully exclude that the switch that regulates the release of the fog-generating fluid from the pre-pressurized reservoir would become micro-leaking or defective. Thus, there is a need for fog-generating devices that have reliable means that are stable over time, even if not used regularly, to transport the fog-generating fluid from the reservoir to the heat exchanger. In particular, a fog-generating device without moving parts or pre-pressurization that could get stuck over time would be very beneficial.

It has been found that in particular the removable housings of the present invention wherein the power source is a pyrotechnic device, solve the above-mentioned problems and allow a much faster generation of fog, due to the high entrance pressure that can be generated at the heat exchanger. Detailed analysis showed that prior art devices using a pump typically provide about 6 ml/s of fog-generating fluid to the heat exchanger at about 4-6 bar. Prior art devices which use a propellant gas to drive the fluid typically operate at about 28 ml/s at about 12-15 bar. Remarkably, a fog-generating device of the present invention comprising a removable housing with a pyrotechnic device have been found to be easily able to provide 60-80 ml/s of fluid to the heat exchanger at about 300-400 bar.

As used herein "reagent" generally refers to a chemical that in a chain reaction with an oxidizer is capable to convert the chemical energy present within said chemical into an energetic gas generation. In principle, any chemical can be used that in reaction with an oxidizer is converted into a gas. In a preferred embodiment, said reagent comprises a fuel and an oxidizer; more in particular said reagent is an fast conflagrating, also known as a deflagrating material, i.e. referring to a material capable of a rapid an high energy release by means of a subsonic combustion that propagates through thermal conductivity wherein hot burning material heats the next layer of cold material and ignites it. As the reagent comprises an oxidizer, there is no need to add an external oxidizer. Thus, the fog-generator of the present invention can be constructed as a closed system that does not need any external input besides ignition energy. After ignition, a chain reaction starts wherein reagent that is ignited is combusted /decomposed to form gas and it's combustions provides the energy needed to ignite nearby remaining reagent. In a particular embodiment, the reagent is an explosive material. The skilled person is able to select any of the known fast conflagrating / deflagrating materials. In a preferred embodiment, the reagent is a so-called low or slow explosive. It has been found that these types of explosives release sufficient gas at a sufficiently fast rate.

In a preferred embodiment, the reagent is a fast conflagrating material, such as a nitrocellulose-based material. Non-limiting examples of suitable reagents are single-based propellants and their composites, such as solid rocket fuel (sugars, polymers (PBAN and carboxyl and hydroxyl)), specific carbohydrates, nitroguanidine, sodium azide (NaN) and metal powders and oxides (aluminium powder and iron oxide, catocine and ferrocene). Preferentially, single-based propellants with a low toxicity or irritation are used, certainly if the generated gas is expelled together with the fog from the fog-generating machine, for example propellants frequently used in airbags. These include Low vulnerability (LOVA) propellants (such as RDX, nitrocellulose, CAB and inert or energetic plasticizers) and FOX-based propellants. In addition, double based propellants consisting of nitrocellulose and nitroglycerin, and triple based propellants consisting of nitrocellulose, nitroguanidine and nitroglycerin or other liquid organic nitrate explosives may be used.

As used herein "ignition means" or "Ignition system" generally refers to the element or elements that in combination provide the energy needed to start the chain reaction to convert the chemical energy present within the reagent into a gas (energetic gas generation). As detailed further herein below, any ignition means can be used and the skilled person is well aware of how to choose ignition means based on the reagent that is used. As non-limiting examples, metal-oxidizers (ziconium-potassium perchlorate, boron-potassium perchlorate,...), metal hydride-oxidizers (zirconium hydride - potassium perchlorate, ...), intermetallics (titanium-boron, nickel-aluminium, palladium-aluminium,...) can be used. In a particular embodiment, an intermetallic composition is used, in particular Palladium-clad aluminium, also known as Pyrofuze. The above types of ignition means are particularly useful since they are stable and only require the flow of an electrical current for ignition. Nonetheless, other ignition means can be used as well, e.g. blasting caps, detonators, and other systems based on shock wave and/or heat production. In general an ignition system comprises a part that transfers energy to the reagent, an ignition switch and an ignition energy source. In particular the fog-generating device of the present invention comprises a part that transfers energy from an ignition energy source to the reagent. While the ignition energy source and ignition switch may be located outside of the fog-generating device, it is preferably located inside the fog-generating device. As a non-limiting example, the ignition energy source may comprise a capacitor, which stores electrical energy. After an ignition switch is switched on, energy from the capacitor is allowed to flow through the part that transfers energy to the reagent, thereby igniting the reagent and starting the gas generation.

In a particular embodiment, the fuel is not a hydrocarbon, such as diesel fuel, gasoline or kerosene. In a further embodiment, the fuel is not a liquid fuel, more in particular the fuel is a solid fuel. As described herein before, the reagent may comprise a fuel and an oxidizer. The fuel and oxidizer may be part of the same molecule, or it may be a mixture of the two (separate) components. For example, nitrocellulose consists of molecules that contain an oxidizer (nitrate ester groups) as well as a fuel (cellulose). Examples of oxidizers that may be added include 5-aminotetrazole nitrate, KNO₃, potassium oxides and ammonium perchlorate.

Other additives may be added as well. These may aid in improving (lowering/increasing) the combustion speed, the produced heat and/or the gas production. Examples include metals and their oxides, ferrocene and katocene, and retardants (e.g. carbonates, nitrates and/or oxylates). The speed of gas production may also be manipulated by coating reagent particles with relatively inert materials. The thickness of the coatings will influence the amount of retardation.

As used herein "a fog generating material" or "a fog generating substance" generally refers to any material or combinations of materials, that can be vaporized when fed through a heat exchanger. When exiting the heat exchanger into the atmospheric pressure and normal ambient temperature and additional coming into contact with the moisture and dust particles [in the outside air] the vapour condenses into tiny liquid droplets suspended in the air as an aerosol, with the formation of a visible fog. In a preferred embodiment, the fog-generating material is a gel or a liquid, in particular a liquid, more in particular a polyol-containing liquid or gel.

It has been found that the energy from the gas that is generated by the ignition of the reagent can be used in several different manners to drive the fog-generating material from the reservoir to the heat exchanger. In a particular example, the gas enters the reservoir and thereby expels the fog-generating material contained therein. In another example, the gas is used to power a pump or turbine that drives the fog-generating material from the reservoir to the heat exchanger. The generated gas may be hot, causing thermal damage to components of the fog-generating material. Therefore, in a particular embodiment, the fog-generating device comprises cooling means **(6)** to cool the gas before it contacts the fog-generating material.

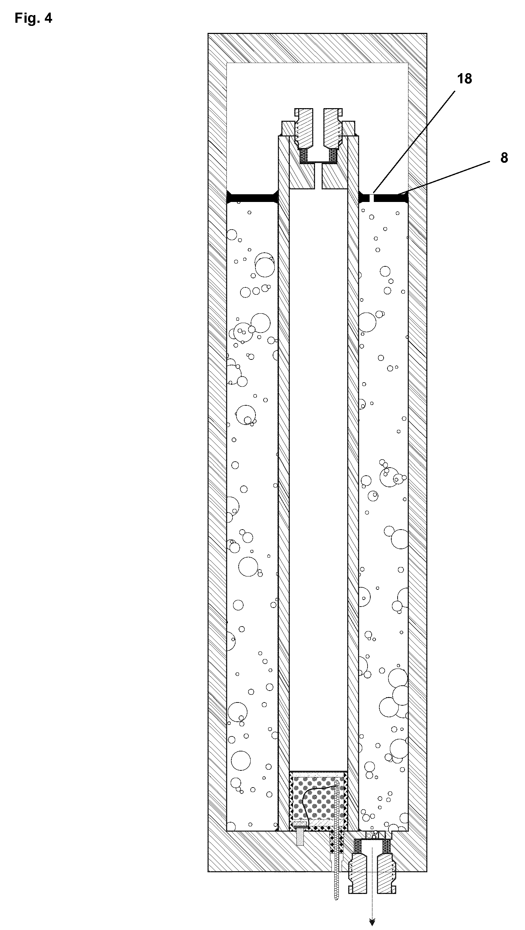

In another preferred embodiment, the removable housing of the present invention further comprises separation means that prevent contact between generated gas and fog-generating liquid **(8).** As for example shown in Figure 4, the separation means are movable. In such instance, movement of the separation means may lead to expelling fog-generating material from the reservoir. In a particular embodiment, generated gas can slidably move said separation means to drive the fog-generating liquid from the removable housing to the heat exchanger.

In another embodiment, said pyrotechnic device comprises a sealed combustion chamber. This prevents undesired contact of the fog-generating material with the reagent and ignition, for example due to movement during transport and installation of the device. In particular when the fog-generating material is a liquid, initial sealing of the combustion chamber prevents wetting of the reagent and the ignition means. In addition, it has been found by the inventors that combustion in an initially sealed combustion chamber and/or housing comprising the reagent, improves the efficiency of reagent combustion, likely due to the higher temperature and pressure inside the chamber and/or housing during gas generation. The chamber is preferentially sealed with a pressure-sensitive seal **(11)** or **(14).** Only after a certain amount of gas has been produced, and, hence, a certain amount of pressure has been built up in the chamber, the combustion chamber is unsealed and the gas is released. Such a pressure-sensitive seal may comprise a burst disc that is ruptured upon high pressure, or a pressure valve. In such embodiment, upon gas generation in the combustion chamber, the pressure-sensitive seal is ruptured, thereby at least partially disintegrating the sealing. As a result, generated gas is released from the combustion chamber and can be used to drive the fog-generating material from the reservoir to the heat exchanger. In addition to a pressure-sensitive seal, as is known by the skilled person, other sealing means can be used that will disintegrate upon gas generation. E.g. seals that will melt above a certain temperature (e.g. zinc-based seals), seals that dissolve upon gas production (e.g. lithium-based seals), or combinations of any of the before-mentioned means. In a preferred embodiment, the sealing means consist of a non-permeable material in that it should prevent moisture from entering the combustion chamber **(10)** comprising the reagent. Such non-permeable material may for example be a metallic or metallic coated material. In an alternative embodiment such sealing means consist of pressure and/or temperature activated /controlled valves.

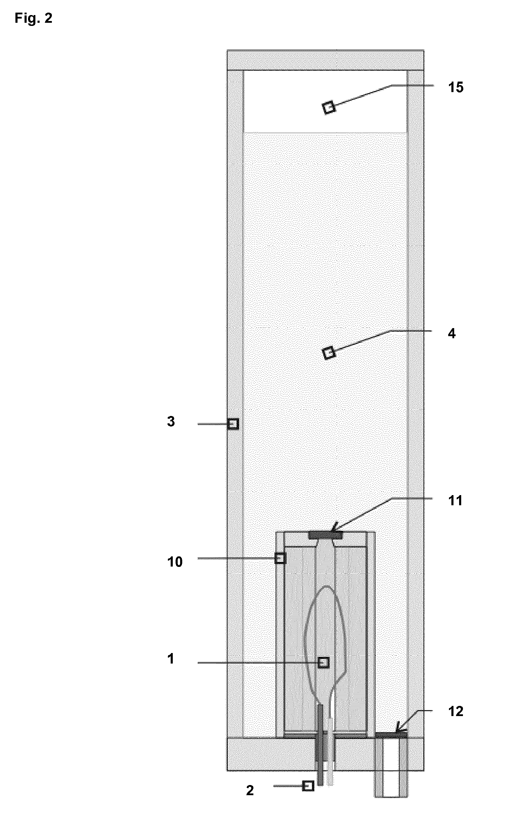

In one embodiment the initial sealing may be constructed so that they fully or partially disintegrate upon gas generation. As for example shown in Figure 2, the reagent **(1)** could be confined in a chamber **(10)** having a pressure and/or temperature sensitive closure **(11).** Upon ignition of the reagent and subsequent gas formation pressure and/or temperature will increase within said chamber. Under influence of said pressure and/or temperature the pressure and/or temperature sensitive sealing **(11)** will disintegrate, thereby releasing the generated gas into reservoir **(3)** containing the fog-generating material **(4).**

More reagent can be added than is strictly necessary to drive the fog-generating fluid from the reservoir to the heat exchanger. Given that only minor amounts of reagent as described herein are needed to generate large volumes of gas, the effects of such an addition to the construction and cost of the device are negligible. However, it has been found that the extra energy produced by the gas generation can be used for several additional beneficial effects.

The higher energy of the expelled fog due to the additional generated gas can also be used to entrain ambient air into the expelled fog. Therefore, in another embodiment, the fog-generating device may further comprise means, such as a steam ejector, to entrain ambient air in the generated fog. The entrained ambient air has been found to result in a better dissipation of the fog into the surroundings.

Furthermore, inclusion of a higher amount of reagent than is necessary for driving the fog-generating material from the reservoir to the heat exchanger has been found useful for purging the heat exchanger after fog generating material has been expelled. Excess gas thus generated can either be used directly or indirectly to purge the heat exchanger after fog generating material has been expelled. When used directly, the excess gas is allowed to flow through the heat exchanger and removes non-ejected vapour out of the heat exchanger into the ambient air. When used indirectly, the excess gas can be used to entrain ambient air into the heat exchanger to purge non-ejected vapour out of the heat exchanger.

In a further aspect, the present invention provides a removable housing for a fog-generating device, comprising a reagent as defined herein and a reservoir containing a fog-generating material, wherein said removable housing further comprises ignition means or elements thereof, to allow transmission of an ignition signal from said fog-generating device to said reagent. In other words, and as will become clear from the detailed description herein below, such a "removable housing" or "cartridge" comprises the consumables used to drive fog-generating material from the reservoir to the heat exchanger.

Furthermore, the present invention provides the use of a fog-generating machine as described herein, or a removable housing as described herein, for generating fog. In particular, for protecting against burglars and intruders. In addition, the present invention provides a method for generating fog, said method comprising:
a) generating gas by igniting reagent(s);
b) using said gas to drive a fog-generating material from a reservoir to a heat exchanger; and
c) generating fog by heating said fog-generating material in said heat exchanger.

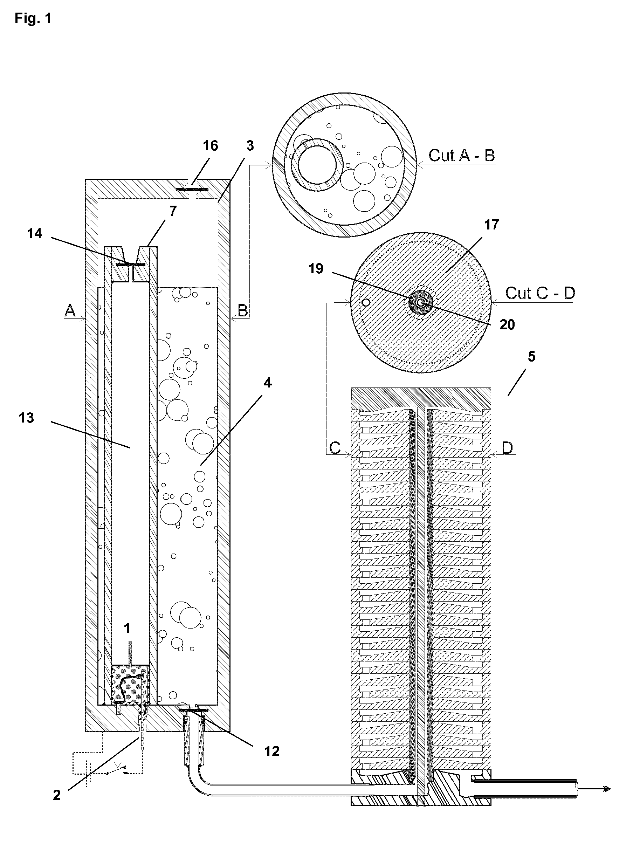

As described herein before, the container that holds reagent and the ignition means may be present within the reservoir of the fog-generating material, or it may be located outside of it. In a particular embodiment, the reagent and the ignition means are comprised in a container which is located in the reservoir. Preferably the ignition means contact the reagent and transfer the energy needed to ignite the reagent. Other components needed to initiate the ignition, such as an ignition controller and an ignition energy source may be located outside of the removable housing and even outside of the fog-generating device of the present invention (See Figure 1). For example, an external surveillance system may send an alarm signal to the fog-generating device, upon which a switch is controlled in the fog-generating device which closes a circuit containing the ignition energy source (e.g. a capacitor or supercapacitor) and the ignition means, thereby igniting the reagent.

Evidently, multiple pyrotechnic devices may be used in parallel or in series direct or via a one-way valve. E.g. one pyrotechnic device may be used to generate gas for driving a fog-generating liquid to a heat exchanger, while another pyrotechnic device may be used for a different purpose, e.g. to purge the heat exchanger after fog production (see also further below). Two pyrotechnic devices may also be used, wherein gas generated by both devices is used to drive the fog-generating material to the heat exchanger. Multiple pyrotechnic devices may also be connected to multiple reservoirs. In this instance, the fog-generating material from these reservoirs may be used at the same time or one after another. Furthermore, the fog-generating device of the invention can be constructed so that after a first reservoir has been emptied, there is still fog-generating material in a second reservoir that can be used to generate fog only after another ignition signal is received. This way, the fog-generating device can be used multiple times when the emptied reservoirs have not directly been replaced. In a particular embodiment, when using multiple pyrotechnic devices each may be located in a separate removable housing. In an alternative embodiment, the removable housing of the present invention may contain two or more pyrotechnic devices.

As described before, separation means may be present to prevent contact between generated gas and fog-generating material, for example if toxic or irritant gasses are produced after ignition of the reagent. In this instance the separation means prevent generated gas from contacting the fog-generating material and, thus, from being expelled together with the generated fog. In a particular embodiment, the separation means are movable, more in particular the separation means can slidably move to drive the fog-generating liquid from the reservoir to the heat exchanger. As an example, the separation means may be a movable, sliding wall within the reservoir, such as a piston. When gas is generated at one side of this wall, the wall moves to expel the fog-generating material from the reservoir towards the heat exchanger. In another embodiment, the separation means can move elastically. For example, the fog-generating material may be present in a compressible packaging, such as an elastic bag. The compressible/ expandable packaging itself may be located in a housing. When generated gas enters the housing, the compressible packaging is compressed or expanded, thereby expelling the fog-generating material. In another embodiment, the separation means include a pump. Energy from the gas generation can be used to power said pump, which in turn drives the fog-generating material from the reservoir to the heat exchanger.

In prior art fog-generating devices, it was common knowledge that as much as possible gas should be mixed with the fog-generating fluid prior to entering the heat exchanger. For example, WO2003001140 describes in detail the benefits of at least partially dissolving in the fog-generating fluid the propellant gas that is used to drive the fluid from the reservoir to the heat exchanger. When gas is mixed in the fog-generating fluid, it expands (explodes as it where) in the heat exchanger, thereby improving the outflow of the fog. Surprisingly, the inventors have found that, if a pyrotechnic device is used to generate gas that drives the fluid to the heat exchanger, the outflow of fog actually improves even further by not solubilizing gas in the fog-generating fluid. In that regard, the embodiments wherein the removable housing further comprises separation means is especially preferred.

As an added benefit, the separation means further help in preventing wetting of the reagent by the fog-generating fluid during transport, handling and use. Due to the separation means, the removable housing can be held in any orientation without fluid contacting the reagent and ignition. E.g. when the removable housing as represented in the figures would be inverted compared to the showing in the figures, the fog-generating device will work as efficiently. The separation means allow the fog-generating liquid to be always in contact with the liquid connection means towards the heat exchanger, even when tilted. Thanks to the construction of the removable housing in this manner, the fog-generating device can also be oriented in any direction. This allows for a much larger degree of freedom when positioning the fog-generating device, which is often crucial to direct generated fog towards valuables or the expected entry of intruders.

In a preferred embodiment, the removable housing of the present invention comprises at least four compartments:
- the first compartment contains the reagent **(1),** the compartment occupies part of the reagent-containing container. This compartment does not need to be enclosed, but optionally reagent holding means **(25)** are present. Reagent holding means prevent that reagent is distributed freely in the remainder of the housing, and in particular in the combustion chamber before ignition. Beneficially, they allow the reagent to be pressed slightly, so that there is a good contact between all the reagent material to ensure that the initiated chain reaction of the reagent is completed over the full mass of the reagent. This has been found to increase combustion efficiency, as more reagent is used in the reaction.
- the second compartment is the combustion chamber **(13)** which is a free space in the initially sealed container holding the reagent. The combustion chamber also increases efficiency and initial pressure build-up.
- the third compartment is an expansion space **(23)** wherein generated gas can expand and start moving the separation means. The expansion space allows the reagent to be combusted completely and thus also aids in the efficiency of combustion.
- the fourth compartment contains the fog-generating liquid. This compartment is enclosed by at least part of the reservoir walls and the separation means.

It has been found that substantially all the reagent in the housing of the present invention has been combusted. Therefore, after the reaction has taken place, the remainder of the housing is clean and does not contain remaining reagent that could be ignited. Thus, the removable housing can be recycled or disposed of safely.

As is evident from the above in either embodiment the energy liberated from the reagent in the formation of the gas is used to drive the fog generating material, with in particular fog-generating fluid from a reservoir to a heat exchanger. Either the energy from the gas generation is used directly because it enters the reservoir and thereby expels the fog-generating material, or it is used indirectly, e.g. to power a pump or turbine. In a preferred embodiment, said gas enters said reservoir to drive said fog-generating material from said reservoir to said heat exchanger. As described before, gas entering the reservoir may contact the fog-generating material, or may be separated from the fog-generating material by separation means. To prevent a potentially negative effect of hot gas on components of the fog-generating material (e.g. glycol), in a particular embodiment, the fog-generating device of the present invention further comprises cooling means **(6)** to cool said gas before it contacts said fog-generating material. Any cooling means can be used, e.g. a cooling channel that passes through the fog-generating material. Fog-generating material surrounding the cooling channel is heated, while gas running through the channel is cooled. Beneficially, in such way, fog-generated material is preheated before it contacts the heat exchanger, thereby requiring less energy from the heat exchanger to convert the fog-generating material into vapour.

In a preferred embodiment, the reservoir containing the fog-generating material is initially closed. This prevents that fog-generating material is released from the reservoir before it is needed. The closing means **(12)** may be as the sealing means described for the combustion chamber. In a particular embodiment, the closing means are pressure sensitive. After gas generating leads a pressure in the reservoir above a certain threshold, the closing means open, thereby starting a flow of fog liquid to the heat exchanger. Thus opening of the closing means places the reservoir in fluid communication with the heat exchanger and this will lead to fog-generating material being driven from the reservoir to the heat exchanger. Evidently, other closing means can be used as well, e.g. a valve that may be opened mechanically. Closing means may be opened at the same time of the ignition, or only after a certain time or pressure or temperature, etcetera. In case said closing means would hamper, further security means **(16)** may be incorporated in the housing of the reservoir comprising the fog-generating material. In its simplest form and as exemplified in Figure 1, such further security means could consist of a pressure sensitive seal such as a bursting disc or security valve.

The fog-generating device according to the present invention will preferably be used for security applications; it should therefore be able to deliver a very high amount of ejected fog per second. Knowing that about 1ml of fog-generating fluid is sufficient to obscure about 1 m³ and that about 1000 Joules, is needed to convert the fog-generating fluid into fog, the heat exchanger should be able to deliver at least 25 kJ/s, and preferably about 100 kJ/s. Given the speed with which the liquid is to be converted in vapor [steam], one cannot solely rely on the thermal conductivity of the heat exchanger used. Consequently, the heat-exchanger to be used in the fog-generating device according to the present invention should have a high heat capacity (C), such as for example by using steel (± 0.46 J/°C per g) or copper, eventually combined with a latent heat of fusion accumulator; and a high heat transfer by a high area of contact between the fog-generating fluid and the heat exchanger. The latter may for example be realized using the labyrinth design with stacked plates **(17)** as shown in Figure 1. Such labyrinth design allows rapid heat transfer but also creates a relatively large dynamic resistance. A pressure drop between input and output of a 50 bar at a flow rate of 100 ml / s is, therefore, not to be ruled out. However, with the high pressure generated in the reservoir containing the fog-generating material, by gas-conversion of the reagent, this drop in pressure is not an issue for the fog-generating device as described herein. With reference to figure 1, the stacked plates are welded to one another around a thick-walled central tube **(19)** feeding the fog-generating liquid to the top of the stack. The pile of stacked plates is covered and connected to a base element **(22)** comprising the in- and outlet, by means of a lid element **(21)** with a central axle **(20)** at the centre of said feeding tube **(19).** Said axle not only increases the heat capacity, but also enhances heat transfer to the fog-generating material traveling upwards in the thus narrowed central tube **(19).**

In yet another particular embodiment, gas purges the heat exchanger after the fog-generated material has been converted to fog. It has been found that purging the heat exchanger prevents negative effects of residues of fog-generating material that remain in het heat exchanger. These residues that remain in the hot heat exchanger may lead to bad smells, corrosion and dry matter build-up. In particular, sufficient reagent is used, so that more gas is generated than is strictly necessary for driving the fog-generating material from the reservoir to the heat exchanger. After the fog-generating material has been driven through the heat exchanger, generated gas keeps flowing through the heat-exchanger, thereby purging it. If the generated gas is used to power a pump that drives the fog-generating material to the heat exchanger, it may continue powering said pump, thereby pumping air through the heat exchanger and purging it.

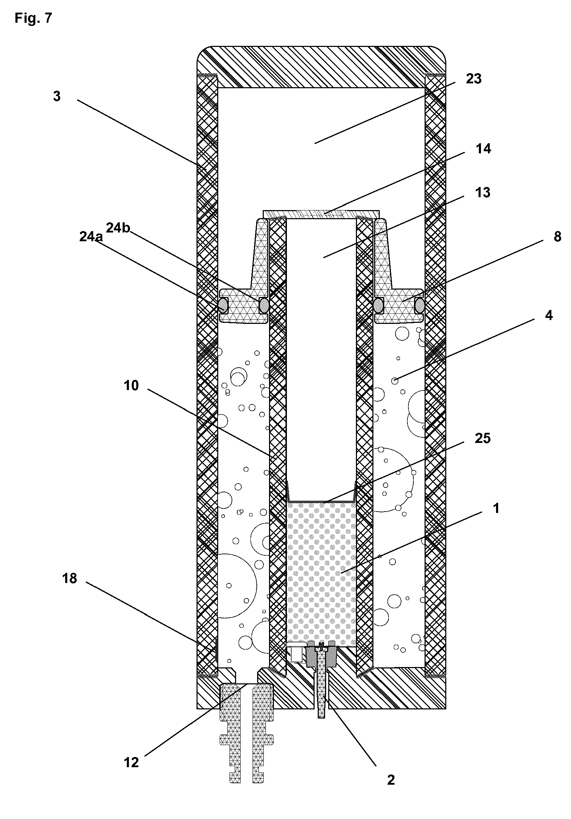

In another particular embodiment, the removable housing of the present invention comprises despressurizing means or venting means. This is particularly useful if the removable housing comprises a pyrotechnic device for driving the fog-generating fluid from the reservoir to the heat exchanger. Depressurizing means allow the escape of gas from the removable housing so that the pressure inside the removable housing is reduced and becomes closer to atmospheric pressure. Depressurizing means allow for the safer handling and recycling of the removable housings of the present invention. Depressurizing means may be constructed so that they will be initiated automatically or they may be constructed to be initiated manually. Evidently, the removable housing of the present invention can comprise automatic as well as manual depressurizing means. Depressurizing means can e.g. be a valve that is to be switched manually. In a particular embodiment, depressurizing means are constructed in such a manner that the pressure in the removable housing is released automatically during or after the fog-generating process. In another particular embodiment, the pressure is released upon removal of the removable housing from the fog-generating device. For example, the depressurizing means comprise a valve that is automatically opened when the removable housing is disconnected from the fog-generating device. In a preferred embodiment, the depressurizing means are constructed in such a manner that pressure in the housing is released when substantially all fog-generating liquid has been expelled from the reservoir. The present inventors have found that, besides being beneficial to the safety when handling and recycling, the depressurizing means can be constructed in such a manner that gas that is released from the housing during depressurizing can be used for purging the heat exchanger. In this embodiment, after substantially all the fog-generating liquid has been expelled from the housing, the generated gas can be expelled from the housing to the heat exchanger, thereby purging the heat exchanger. For example, with reference to Fig. 7, the removable housing may comprise separation means that are moved slidably be generated gas to expel fluid from the reservoir. The reservoir contains depressurizing means present as a groove in the wall of the reservoir. When substantially all of the fluid has been expelled from the reservoir, the separation means are located at the groove. Gas generated from the reagent is present at a high pressure and can escape from the housing through the groove. Thereby, the pressure inside the housing is reduced towards the atmospheric pressure. Escaped gas may enter the liquid connection means towards the heat exchanger, thereby purging the heat exchanger, providing the benefits described above.

The inventors found that, due to the limited volume of reagent that is needed to generate the gas for the complete process of fog generation, a removable housing for the fog-generating device of the present invention can easily be build which comprises a reagent and a reservoir containing fog-generating liquid. Such a removable housing comprising a pyrotechnic device can be constructed to be very small. As the use of a pyrotechnic device obviates the need for a pump or a large compressed vessel in the fog-generating device, the removable housings of the present invention allow for the construction of much smaller fog-generating devices compared to the prior art. Furthermore, in contrast to several prior art fog-generating devices, the devices of the present invention comprising a removable housing, can easily be serviced so that they can be used again. After a fog-generating device has been used, only the insertion of a small removable housing of the invention is needed to get a functional fog-generating device. Whereas in prior art devices, a whole new fog-generating device needed to be transported, thanks to the present invention only small cartridges need to be transported. Furthermore, a user can easily store spare removable housings in case a replacement is needed. The fool-proof replacement allowed by the removable housings of the present invention allows a non-skilled user to replace the removable housing himself. In prior art devices, servicing an emptied fog-generating device would require replacement of the whole device, necessitating disconnecting the device from the security system, something that can only be done by a skilled technician.

The invention provides a removable housing for a fog-generating device comprising a reagent and a reservoir containing a fog-generating material, wherein said removable housing further comprises means to allow transmission of an ignition signal or of ignition energy from said fog-generating device to said reagent. The skilled person is well aware on how to select means to allow transmission of an ignition signal/impact conveyer or energy from said fog-generating device to said reagent, depending on the reagent that is used and the structural requirements of the removable housing. In a particular embodiment, the removable housing comprises at least part of the ignition means and connection means to transmit a signal or ignition energy from the fog-generating device to said at least part of the ignition means. For example, the removable housing may comprise an ignition wire that contacts the reagent and ignites when an electrical current runs through it. Electrical connection means will connect said ignition wire to the electrical power system of the fog-generating device. In case of activation, the fog-generating device will transmit an electrical current or signal to the ignition wire or ignition means in the removable housing and start the gas generation. Evidently, other possibilities exist to transmit the ignition signal from the fog-generating device to the removable housing, such as means that allow transmission of an shock produced by an element of the fog-generating device to the reagent, means that allow transmission of laser energy from a laser source in the fog-generating device to the reagent in the removable housing, etcetera.

Exemplary embodiments of such removable housings, incorporating different embodiments of the present invention, are provided in figures 2 to 7. Each of said figures provide cross sectional views of the removable housings for use in a fog-generating apparatus according to the present invention.

Figure 2, represents said embodiment wherein the removable housing comprises a pyrotechnic device. The pyrotechnic device is a container **(10)** comprising the reagent and the ignition means **(2),** the container **(10)** being present within the reservoir **(3)** containing the fog-generating material **(4)** (in the exemplified embodiment being a fog-generating fluid). Ignition of the reagent results in the conversion and formation of gas, with a built up of pressure within said housing. At the top, said container comprises a pressure-sensitive seal **(11)** (in the present instance a bursting disc) that opens at a given pressure (in the present instance a pressure of about 180 Bar). Upon opening, gas expels into the fog generating material with an accompanying built up of pressure in the reservoir comprising the fog generating material. Through closing means **(12)** (such as a valve or further pressure-sensitive seals) release of the fog-generating material now under pressure, can be controlled. In a particular embodiment this closing means consists of a pressure-sensitive seal, thus excluding the presence of moving elements in controlling the release from the fog-generating fluid from its reservoir. Upon opening of said closing means, the gas generated from the reagent will drive the fog-generating material out of the reservoir to the heat exchanger to convert the fog-generating fluid in a fog leaving the fog-generating device.

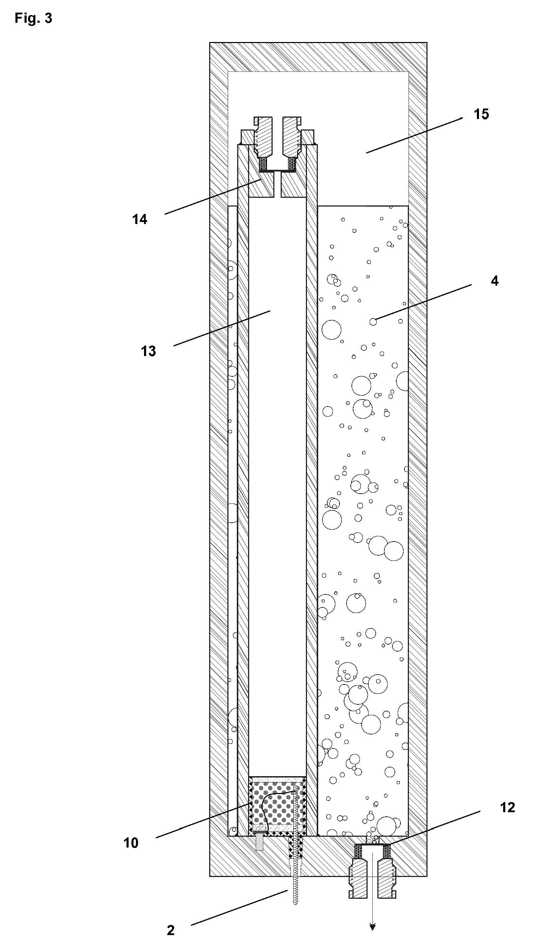

In Figure 3, the removable housing further comprises a combustion chamber **(13).** As already mentioned hereinbefore, the presence of such an initially sealed combustion chamber improves the efficiency of reagent combustion. Different from the embodiment shown in Figure 2, the presence of the initially sealed combustion chamber will prevent an eventual interaction between the fog-generating material and the reagent. The latter could lead to undesirable and potentially harmful reaction products, and should preferably be avoided. In the present instance ignition of the reagent results in the conversion and generation of a gas that is initially confined in the combustion chamber with a built up in pressure that will eventually result in the opening of said chamber through a pressure-sensitive seal **(14)** (in the present instance a bursting disc). Further release of the gas into the reservoir and eventual release of the fog-generating material from the reservoir is analogous to the embodiment of Figure 2 above.

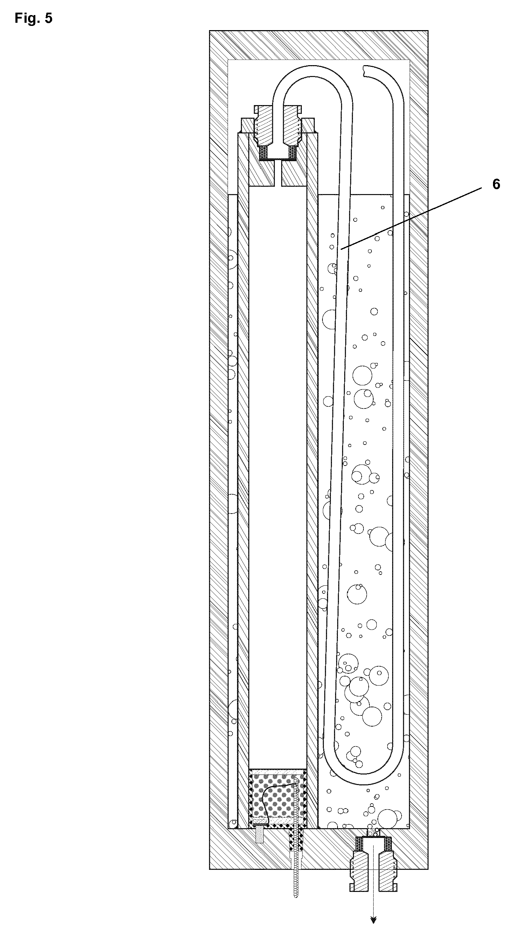

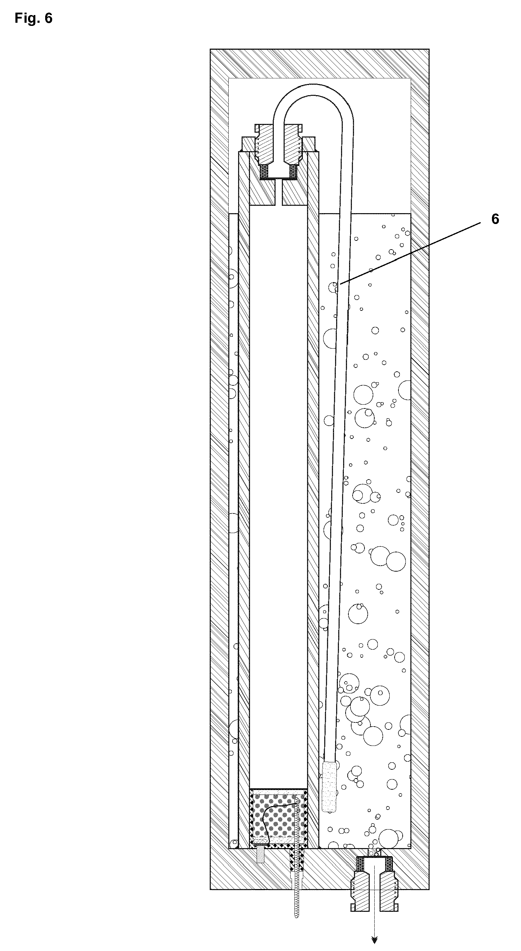

As already mentioned herein before, in order to prevent a potentially negative effect of hot gas on components of the fog-generating material (e.g. glycol), in a particular embodiment, the fog-generating device of the present invention further comprises cooling means **(6)** to cool said gas before it contacts said fog-generating material. Figures 5 and 6 provide examples of such cooling means. In Figure 6 a cooling channel passes through the fog-generating material, with release of the cooled gas into the topping gas **(15)** typically found in a reservoir with fog generating fluid. To preserve the fog-generating material, such topping gas consists of inert gasses like nitrogen or argon. In the alternative embodiment shown in Figure 6, the generated gas is released into the fog generating material instead.

In each of the foregoing exemplified embodiments the generated gas will ultimately get in contact with the fog-generating material. As explained herein before, and dependent on the fog-generating material used, this is not always desirable. Thus in certain instances, one should prevent direct contact between the fog-generating material and the gas generated from the reagent. In said instance the removable housing comprises further separation means **(8)** between the fog-generating material and the gas generated from the reagent, such as the movable wall shown in Figure 4 and Figure 7, surrounding the combustion chamber in a liquid-tight manner. In other words, said wall operates as a plunger in a shaft (in the present instance the reservoir comprising the fog-generating fluid and the outer perimeter of the combustion chamber) and drives the fog-generating material from the reservoir towards the heat exchanger. Consequently, in a particular embodiment, said separation means further comprises sealing means **(24a** and **24b)** to prevent fluid leakage between said plunger and the shaft. Said sealing means can be any suitable sealant, including a sealing gel, one or more sealing rings or a sealing plunger head. Such sealing rings and sealing plunger head can be made from any suitable material known in the art, such as for example, but not limited to plastic, metal or elastomer. As explained herein, in a particular embodiment excess gas is generated and said excess gas can be used, either directly or indirectly, to purge the heat exchanger and remove non-ejected vapour out of the heat exchanger into the ambient air. To enable said purging in case of further separation means **(8)** between the fog-generating material and the gas generated from the reagent, said further separation means optionally comprise depressurizing means **(18).** As for example shown in Figure 5, said depressurizing means could consist of a burst plate or break point in the movable wall. In another embodiment, depressurizing means **(18)** may be present as a groove in the reservoir, such as shown in Figure 7. When the separation means **(8)** have expelled substantially all the fog-generating fluid from the reservoir, they are located at the groove, thereby allowing excess gas to escape the reservoir and enter the lining towards the heat exchanger, thereby purging said heat exchanger.

The construction of a removable housing comprising reagent and fog-generating material allows for replacement of said consumables in a single action. Thus, the use of such a removable housing obviates the need to replace the reagent and the fog-generating material separately. Evidently from the above, the fog-generating device of the present invention may comprise multiple removable housings, e.g. for redundancy or for additional fog generation.

## Claims

1. A removable housing for removably connecting to a fog-generating device that comprises a heat exchanger, said removable housing comprising a power source and a reservoir containing fog-generating liquid.

2. The removable housing of claim 1, wherein said power source can provide energy for driving said fog-generating liquid from said reservoir to the heat exchanger of the fog-generating device and/or for at least partially powering said fog-generating device.

3. The removable housing of claim 1, wherein said power source is a chemical power source, such as a battery, a supercapacitor and/or a pyrotechnic device.

4. The removable housing of claim 3, wherein said pyrotechnic device comprises a reagent and ignition means and wherein ignition of the reagent generates gas that allows driving the fog-generating liquid from the reservoir to the heat exchanger.

5. The removable housing of claim 4, further comprising separation means that prevent contact between generated gas and fog-generating liquid.

6. The removable housing of claim 5, wherein generated gas can slidably, elastically or expandably move said separation means to drive the fog-generating liquid from the removable housing to the heat exchanger.

7. The removable housing of claim 4, wherein said pyrotechnic device comprises a sealed combustion chamber.

8. The removable housing of claim 7, wherein said combustion chamber is sealed with a pressure-sensitive seal.

9. The removable housing of any one of the previous claims, further comprising depressurizing means.

10. The removable housing of claim 9, wherein the depressurizing means are constructed in such a manner that pressure in the housing is released after substantially all fog-generating liquid has been expelled from the reservoir.

11. The removable housing of claim 10, wherein said depressurizing means are constructed in such a manner that generated gas can be expelled from the housing to the heat exchanger, thereby purging the heat exchanger.

12. The removable housing of claim 3, wherein said battery is a rechargeable battery, such as a rechargeable battery selected from a lead-acid battery, nickel cadmium battery (NiCd), a nickel metal hydride (NiMH) battery, a lithium ion (Li-ion) battery, and a lithium ion polymer (Li-ion polymer) battery.

13. A fog-generating device comprising a heat exchanger and a removable housing according to any one of the previous claims.

14. The fog-generating device of claim 13, wherein said power source in said removable housing is a supercapacitor and/or a rechargeable battery, said fog-generating device further comprising:
- charging means that allow charging said supercapacitor and/or rechargeable battery by said external power supply, and
- a controller that controls said charging means to ensure that said supercapacitor and/or rechargeable battery is kept in a charged state.

15. Use of a fog-generating device according to claim 13 or 14, or the removable housing according to any one of claims 1 to 12, for generating fog, in particular for generating fog to protect against intruders and/or physical threat by persons.
